# EUROPEAN PATENT SPECIFICATION

(11) **EP 3 396 339 B1**
(45) Date of publication and mention of the grant of the patent: **06.11.2019**
(21) Application number: 18169274.0
(22) Date of filing: 25.04.2018
(51) Int. Cl.: G01K 1/02, E06B 3/66

(54) **SET OF THERMOMETER AND ISOLATION GLASS, MAINLY FOR FILLINGS OF CONSTRUCTION OPENINGS**
SET AUS THERMOMETER UND ISOLIERGLAS, HAUPTSÄCHLICH FÜR FÜLLUNGEN VON BAUÖFFNUNGEN
ENSEMBLE DE THERMOMÈTRE ET DE VERRE D'ISOLATION, PRINCIPALEMENT POUR DES REMPLISSAGES D'OUVERTURES DE CONSTRUCTION

(30) Priority: 26.04.2017 SK 500432017 U
(43) Date of publication of application: 31.10.2018
(73) Proprietor: Bluestorm Systems, s. r. o., 821 06 Bratislava (SK)
(72) Inventor: SKUPIL, Juraj, 821 06 Bratislava (SK)
(74) Representative: Porubcan, Róbert

(56) References cited:
- AT-U1- 8 472
- CN-A- 101 017 111
- DE-U1-202005 005 017
- US-A- 4 979 342

## Description

### Field of technology

The invention concerns thermometer with the indicator (display, marker) placed between the glass plates of the isolation double glass, triple glass or multi glass, which for the filling of the windows, door or similar construction and technical elements. The thermometer is designed mainly for measuring exterior temperature of the environment, whereby the indicator of the measured temperature is the inner component of the isolation glass.

### Prior state of the technology

Various types of mechanical and digital thermometers are used in order to measure to exterior air temperature and display it, whereby these are attached to the frame of the window or outer surface of the glass. The thermometer attached to the feature of the window does not obstruct during the cleaning of the glass plate, but it limits the visibility of the scale of the thermometer. Exterior thermometers which are attached to the surface of the glass plate, for example by means of suction cups such as in publications CN101017111A, NZ570935A, US4973170A, are also used. During the cleaning of the windows the suction cups can be detached and later re-attached by the same cups. The disadvantage of this arrangement is low reliability of the suction cups during the long-term use, and also unpleasant appearance of the suction cups.

Other solutions, such as CN2205964Y, DE202004004716U1, CN2465163Y, CN2465164Y, CN202204603U, DE202005005017U1, NZ570935A, disclose the attachment of the thermometer on the outer glass plate by means of the adhesive layer. In such case the body of the thermometer obstructs during the cleaning of the windows. During the further degradation of the adhesive layer, mainly under the influence of the rain, sunlight or frost, there is a risk a falling off of the thermometer, which can also harm persons under the window during its fall. Another disadvantage of these solutions is the inability to subsequently attach foils on the glass plate with the thermometer.

Publications CN2196778Y, CN200952960Y disclose the use of two thermometers for measuring of the exterior and interior temperature, whereby the thermometers include a magnetic field and are connected together by magnets; one thermometer is on the inner side of the glass plate, the other is on the outer side of the same glass plate. This solution is limited to the filling with a single glass plate, which, however, lacks isolation characteristics.

Such technical solution is desired and not known, which will eliminate these deficiencies, which will be of simple construction and easy to mount.

### Essence of the invention

The deficiencies in the prior state of the art are significantly remedied by the set of the thermometer and isolation glass, mainly for window fillings, where the thermometer has a temperature sensor and an indicator of the measured value of temperature, whereby the indicator is designed for adjacent placement in the glass plate according to this invention which essence lies in the fact that the indicator is placed in the closed space between the two glass plates of the isolation double glass, triple glass or multi glass. Usually the closed space between the glass plates will be filled by isolation gas - inert gas, for example argon.

The important feature of the proposed invention is that the body of the thermometer, mainly the indicator, is not placed from the outer site, but it is situated inside the isolation double glass, triple glass or multi glass. The terms "double glass", "triple glass" or "multi glass" in this file denotes a construction set which involves the respective number of glass plates which are separated by a spacing frame or spacer. The spacer and glass plates are glued into a single unit around the circumference. The term "isolation glass" in this text denotes and realization of a double glass, triple glass or multi glass.

The placement of the thermometer inside the isolation glass brings significant advantage in that the surface of the glass plates is solid, uninterrupted and easy to clean or process in other way. The proposed invention rules out the risk that the body of the thermometer falls under the window after some time. The indicator of the measured temperature itself is protected by the layer of the window against the outside weather conditions. The indicator can be mechanical, for example during the use of the bi-metal thermometer, or - preferably - electronic. The proposed invention is not dependent on a particular type of the thermometer; its significant feature is the placement of any type of the flat thermometer inside the isolation glass.

From the point of view of achieving pleasant aesthetic results it will be preferable if the indicator has a form of the transparent LCD display, which displays by the dark line on the transparent background the numerical value of the temperature. In such case the isolation glass remains transparent even in the thermometer zone, and only when looking through the window the exterior temperature datum is visible. Pursuant to the type of the thermometer the connection of the indicator of the temperature with the outer environment can be realized in various ways. The sensor of the temperature can be placed on the outer side in the vicinity of the edge of the isolation glass, whereby the evaluation unit of the thermometer is connected with the sensor by means of a flexible flat wiring which runs through the spacer or alongside the profile of the spacer.

In another arrangement the temperature sensor can be adjacent to the small opening in the glass plate and where the vicinity of the opening is sealed by mastic, so that the tightness of the isolation glass is not affected.

In another arrangement the sensor can be pressed from the inside onto the outer glass plate and the assessment unit will correct the measured datum pursuant to the algorithm which considers the heat transition through the wall of the glass plate. In order to make the calculation of the exterior temperature more precise, the thermometer can have a second sensor placed adjacently to the inner side of the isolation glass. Thanks to the data from the second sensor the assessment unit can define the temperature gradient an on its basis a temperature in the exterior is calculated more precisely even though the sensor of the temperature itself is placed inside the isolation glass.

The assessment unit of the thermometer and the display of the measured value can be connected with the sensor contactlessly, for example on the basis of NFC, RFID or ZigBee standard. The sensor can in such case be placed in a more advantageous, for example shielded, place.

The placement of the thermometer with the electronic elements inside the isolation glass creates a possibility to add other functionalities to the isolation glass. Thanks to the existing source of the electric power, for example from a battery or accumulator in the spacer or from a photovoltaic cell the thermometer or other additional device inside the isolation glass can be connected with the communication devices of the users. The thermometer or other additional device which is connected with the isolation glass can have WiFi or Bluetooth communication channel. This allows the user to connect to the thermometer or additional device with his PC, tablet, smartphone, and allow him to use the data from the thermometer or additional device, or control these devices, and so on. Various applications can be produced and used by this arrangement.

The thermometer or the additional device can have two groups of contactless communication channels; the first group can be set for the internal communication with the sensors and the second group for the communication with the user or other external interface. Thanks to this the set of the isolation glass according to this invention can be connected to the information network in the building and can be part of the smart set of the intelligent building. Thee additional device will be usually placed inside the isolation glass in the same way as thermometer, or some of its parts can be placed within the spacer or on the outer side of the spacer.

In order to increase the use value of the device according to this invention, the thermometer can be supplied by other functions, for example the measurement of the atmospheric pressure, humidity and so on. The additional device or direct component of the thermometer can be a pressure sensor, humidity sensor, sensor of the movement in the interior or exterior, solar radiation intensity sensor, and so on.

In the preferable arrangement the thermometer or additional device can include an assessment unit for determining the heat losses of the isolation glass. It can calculate the temperature gradient and after the comparison with the data stored in the memory the thermometer can signalize a loss of the original isolation features of the isolation glass. Hitherto the degradation of the isolation characteristics of the windows has been practically unobservable; the loss of the isolation gas is not usually visible. For the purposes of indirect assessment of isolation features of the isolation glass can include the indicator of the presence and/or share of the isolation gas inside the isolation glass. The device in such arrangement shows the datum concerning the share of the isolation gas either on the display of the temperature or on the independent display element. In a simple arrangement such assessment can have a form of a color strip which reacts with its color to the presence of the isolation gas. In another arrangement the volume of the isolation gas can be displayed in a preset interval, or upon request.

The additional device can be a LED lighting which can be controlled by the contactless communication interface. The LED lighting, for example in form of a LED strip connected to the profiles of the spacer, can produce an illumination of the space, a protection against the sighting from the outside, or it can have an indication function, where the color of the lighting will be related to the assessed data, for example exterior temperature, low value of the isolation gas inside the isolation glass, and so on.

The LED lighting can also be used as an indicator of the presence of the isolation gas, where the shining of the LED with suitable wavelength makes presence of the isolation gas inside the isolation glass visible.

In order to use the indication of the presence of the isolation gas inside, or in order to make use of the assessment of current isolation features of the isolation glass, it will be preferable if the isolation glass will have a valve for resupply of the isolation gas. This limits the environmentally harmful substitution of the unbroken isolation glasses with new isolation glasses due to the loss or degradation of the isolation gas.

The additional device can also be an element for control of the light permeability of the glass plate. Pursuant to the measured temperature or pursuant to the measured solar radiation intensity at least one glass plate of the isolation glass can be darkened. Preferably the darkening can take place on whole surface with exception of the surface which is opposite to the temperature display so this remains readable to the user. The darkening of the glass plate can be controlled directly by the user through connected smartphone, tablet, PC or central controlling system of the building, too.

The advantage of the proposed invention is the maintenance of the smooth, uninterrupted outer surface of the isolation glass. The isolation glass with the thermometer according to this invention is easy to clean or plastered with foils. In cases of publics spaces there is no risk of the theft of the thermometer, since the thermometer is not available even when the window is opened. The thermometer cannot fall out. The isolation glass includes a thermometer in itself directly from the production and the customer can choose such realization of the isolation glass during the choice of the window, or later when the broken isolation glass is replaced in an existing window. During the glazing of the frames of the windows and doors the thermometer presents no complication. The isolation glass with the thermometer according to this invention can be used in other products, for example refrigerator door, freezer door, stalls, and so on.

### Description of drawings

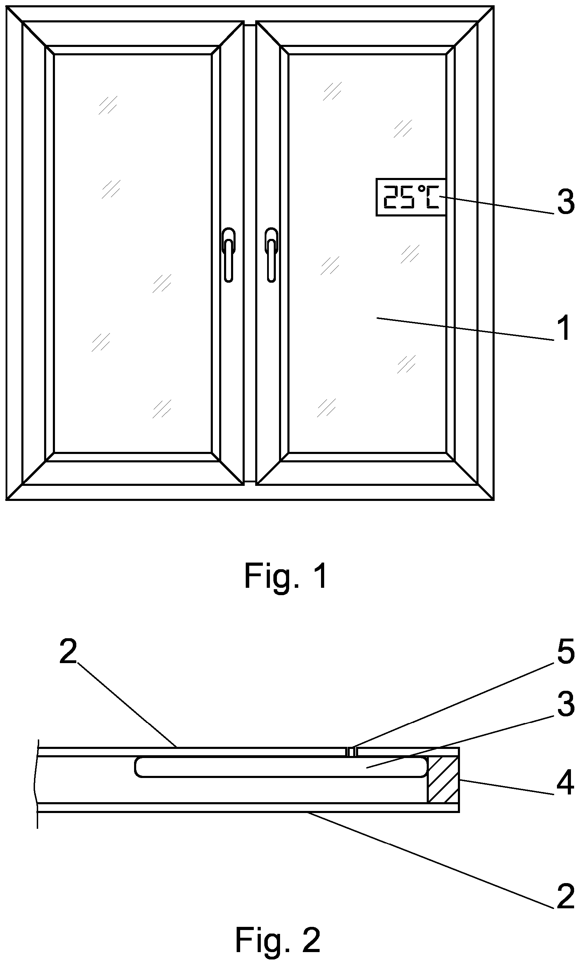

The invention is further disclosed by means of figures 1 to 6. The used scale of depiction and the ratio of sizes of individual elements, for example the ratio of sizes of the indicator to the window's size, do not have to correspond to the descriptions in the examples and these scales and ratios of size cannot be interpreted as limiting the scope of protection.
Figure 1 is a view of the double-winged window where the isolation double glass involves a thermometer according to this invention.
Figure 2 depicts a cross-section view of the isolation double-glass without the window frame.
Figure 3 is a cross-section of the isolation triple-glass without the window frame, where the thermometer with the indicator is placed in the inner space oriented towards the outer side of the window.
Figure 4 is a view of the thermometer with the semi-transparent photovoltaic cell in order to recharge the accumulator of the thermometer.
Figure 5 is a cross-section of the isolation triple glass where the thermometer is connected with the exterior sensor of the temperature by the wiring which runs through the adhesive sealant of the spacer.
Figure 6 is an example of the displayed information in the expanded embodiment, for example including a weather forecast, current time and humidity in the exterior.

### Examples of realization

### Example 1

In this example according to figures 1 and 2 the thermometer is set inside the isolation double-glass. In the glass plate 2, which is designed to be oriented outside, into the exterior, there is a small opening produced close to the edge, whereby the temperature sensor 5 falls into this opening. The temperature sensor 5 is part of the body of the thermometer, which also includes an indicator 3, an assessment unit and a battery.

The indicator is a transparent LCD display which is not disruptive; the dark lines in the view only produce a datum concerning the temperature, or other parts of the display are translucent.

The thermometer is attached by its lateral edge to the spacer 4 and it is adjacent to the outer glass plate 2. The vicinity of the opening with the temperature sensor 5 is sealed by the transparent polyurethane mastic; the inside of the double-glass is filled with argon. The isolation glass 1 is made to measure pursuant to the order of the windows' producer, whereby the customer can choose that only one wing of each window will have an exterior thermometer. During the gluing two glass plates 2 into the isolation double-glass the thermometer is inserted and glued inside. The resulting isolation glass 1 is subsequently mounted into the wing of the window, in the same way as common isolation glass 1.

### Example 2

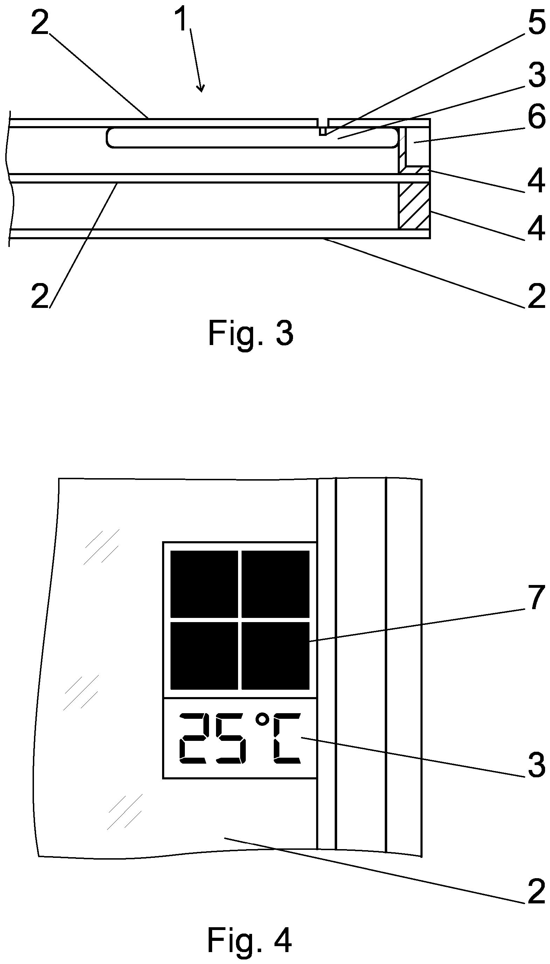

Thermometer in this example according to figures 3 and 4 is inserted into the isolation triple glass in such a way that the body of the thermometer with the indicator 3 is between the second and third glass plate 2. The third glass plate 2 is after the mounting oriented towards the exterior. The accumulator 6 is placed in the spacer 4; it is approachable when the sealing strip of the winged window is moved away.

The indicator 3 has a form of the transparent LCD display which has a photovoltaic cell 7 in its upper part.

### Example 3

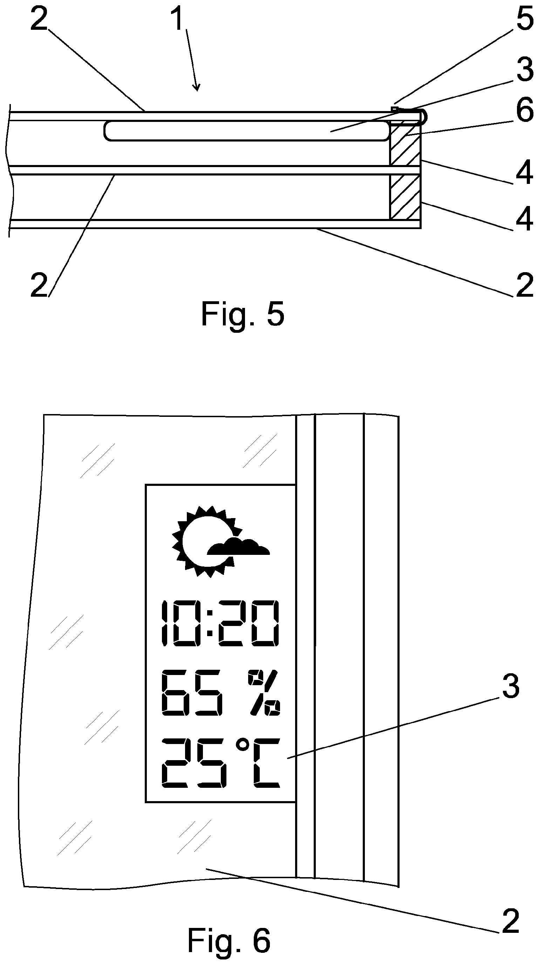

Thermometer according to figures 5 and 6 has a temperature sensor 5 led to the outer side of the glass plate 2. The assessment unit, aside of temperature, also gathers data concerning air humidity, atmospheric pressure, and it forecasts weather on the basis of these data.

The loss of isolation function of the isolation glass 1 is also displayed on the indicator 3.

### Example 4

Indicator of the presence of the argon in the inner space of the isolation double-glass is part of the thermometer in this example.

### Example 5

Inside the isolation glass 1 there is an additional device, aside of the thermometer, which is connected with the thermometer and the indicator 3 and it involves a WiFi and Bluetooth communication module, an exterior pressure sensor, an interior humidity sensor, a sensor of the movement in the interior and exterior, a solar radiation intensity sensor, a sensor of the volume of the isolation gas, and the control of the LED light strip which is connected on the upper inner edge of the spacer 4.

User will connect to the thermometer and the additional device by means of an independent application in which he can view the measured current values as well as a course of these values in a given time frame, for example lowest temperature values during the week.

### Example 6

Inside the isolation glass 1 is, aside of the thermometer, an additional device, which is connected to the thermometer and involves a WiFi communication module. The attached device has a solar radiation intensity sensor, the sensor of the movement in the interior and control of the transparency of the glass plate 2. The data concerning the temperature and local intensity of the solar radiation are sent to the control center of the building through the WiFi communication module and after these data are assessed the control center will send an instruction for partial darkening of the glass plate 2 so that the room is not overheated. If the additional device in this example records a movement in the room, the glass plate 2 will become transparent so that its main function is maintained and user's outside view is uninterrupted. After the set time of inactivity, the glass plate 2 will be darkened again so that the need to air condition the room is diminished. The added devices can communicate with the control of the blinds or shutters.

### Industrial applicability

The industrial applicability of the invention is obvious. Pursuant to the invention it is possible to industrially and repeatedly produce and use isolation glasses with the inbuilt thermometers, mainly for mounting to the windows, doors, transparent fillings of the refrigerators, and so on.

### List of related symbols

- 1: - isolation glass
- 2: - glass plate
- 3: - indicator
- 4: - spacer
- 5: - temperature sensor
- 6: - accumulator
- 7: - photovoltaic cell

## Claims

1. A set of a thermometer and an isolation glass, mainly for fillings of construction openings, where the thermometer has a temperature sensor (5) and an indicator (3) of a measured temperature, and where the isolation glass (1) includes at least two glass plates (2), whereby the indicator (3) is designed for adjacent placement to the glass plate (2), is **characterized by the fact**, that
the indicator (3) is placed inside a closed space between the two glass plates (2) of the isolation glass (1).

2. The set of the thermometer and the isolation glass, mainly for the fillings of the construction openings according to the claim 1 **is characterized by the fact,** that the space between the glass plates (2) with the indicator (3) is filled by an isolation gas, preferably an inert gas.

3. The set of the thermometer and the isolation glass, mainly for the fillings of the construction openings according to the claim 1 or 2 **is characterized by the fact,** that the glass plates (2) form an isolation double-glass or isolation triple-glass.

4. The set of the thermometer and the isolation glass, mainly for the fillings of the construction openings according to any of the claims 1 to 3 **is characterized by the fact,** that the indicator is attached to a spacer (4) which connects the glass plates (2) along a circumference.

5. The set of the thermometer and the isolation glass, mainly for the fillings of the construction openings according to the claim 4 **is characterized by the fact,** that the glass plate (2) has an opening which connects an outer environment with the temperature sensor (5) placed in the opening and surroundings of the opening are sealed by a sealant.

6. The set of the thermometer and the isolation glass, mainly for the fillings of the construction openings according to any of the claims 1 to 5 i s **characterized by the fact,** that it has an electronic assessment unit connected with the temperature sensor (5) and the indicator (3)

7. The set of the thermometer and the isolation glass, mainly for the fillings of the construction openings according to the claim 6 **is characterized by the fact,** that the temperature sensor (5) is placed on an outer side of the isolation glass (1) and it is connected with the assessment unit by a flexible wiring which runs through the spacer (4) or alongside the spacer (4).

8. The set of the thermometer and the isolation glass, mainly for the fillings of the construction openings according to the claim 6 **is characterized by the fact,** that the temperature sensor (5) is connected with the assessment unit wirelessly, preferably by means of an NFC or RFID or ZigBee platform.

9. The set of the thermometer and the isolation glass, mainly for the fillings of the construction openings according to any of the claims 6 to 8 **is characterized by the fact,** that it has an accumulator (6); preferably the accumulator (6) is placed in the spacer (4), especially preferably from its outer side.

10. The set of the thermometer and the isolation glass, mainly for the fillings of the construction openings according to any of the claims 1 to 9 **is characterized by the fact,** that it involves a contactless communication module for connection with a communication device of a user, preferably in form of a WiFi and/or Bluetooth platform.

11. The set of the thermometer and the isolation glass, mainly for the fillings of the construction openings according to any of the claims 1 to 10 **is characterized by the fact,** that it has a photovoltaic cell (7).

12. The set of the thermometer and the isolation glass, mainly for the fillings of the construction openings according to any of the claims 1 to 11 **is characterized by the fact,** that the indicator (3) includes an LCD display, preferably transparent LCD display.

13. The set of the thermometer and the isolation glass, mainly for the fillings of the construction openings according to any of the claims 1 to 12 **is characterized by the fact,** that it includes the assessment unit for a measurement of an atmospheric pressure and/or air humidity and/or for a weather forecast.

14. The set of the thermometer and the isolation glass, mainly for the fillings of the construction openings according to any of the claims 1 to 13 **is characterized by the fact,** that it includes the assessment unit for an assessment of a heat losses of the isolation glass (1).

15. The set of the thermometer and the isolation glass, mainly for the fillings of the construction openings according to any of the claims 1 to 14 **is characterized by the fact,** that it includes an indicator of a presence and/or share of the isolation gas inside the isolation glass (1) and/or the humidity sensor and/or a sensor of a movement in an interior or an exterior and/or a solar radiation intensity sensor and/or a control of a lighting inside the isolation glass (1) and/or a control of a darkening of at least one glass plate (2).

## Patentansprüche

1. Ein Set aus Thermometer und Isolierglas, insbesondere für Füllungen von Bauöffnungen, wobei das Thermometer einen Temperatursensor (5) und einen Anzeiger (3) für gemessene Temperatur besitzt und wo das Isolierglas (1) mindestens zwei Glasscheiben (2) aufweist, wobei der Anzeiger (3) an anliegende Platzierung an einer Glasscheibe (2) angepasst ist, **dadurch gekennzeichnet, dass**
der Anzeiger (3) sich in einem geschlossenen Raum zwischen zwei Isolierglasscheiben (2) vom Isolierglas (1) befindet.

2. Der Set aus Thermometer und Isolierglas, insbesondere für Füllungen von Bauöffnungen nach Anspruch 1, **dadurch gekennzeichnet, dass** der zwischen den Glasscheiben (2) bestehende Raum mit dem Anzeiger (3) mit Isoliergas, vorteilhaft mit Inertgas ausgefüllt ist.

3. Der Set aus Thermometer und Isolierglas, insbesondere für Füllungen von Bauöffnungen nach Anspruch 1 oder 2, **dadurch gekennzeichnet, dass** die Glasscheiben (2) eine isolierende Doppelscheibe oder eine isolierende Dreifachscheibe bilden.

4. Der Set aus Thermometer und Isolierglas, insbesondere für Füllungen von Bauöffnungen nach einem der Ansprüche 1 bis 3, **dadurch gekennzeichnet, dass** der Anzeiger (3) an einem Abstandhalterrahmen (4) angebracht ist, mit dem die Glasscheiben (2) umlaufend verbunden sind.

5. Der Set aus Thermometer und Isolierglas, insbesondere für Füllungen von Bauöffnungen nach Anspruch 4, **dadurch gekennzeichnet, dass** die Glasscheibe (2) eine Öffnung aufweist, die die Außenseite mit dem Temperatursensor (5) verbindet, der Temperatursensor (5) in der Öffnung platziert ist und der Öffnungsumkreis mit Dichtmittel abgedichtet ist.

6. Der Set aus Thermometer und Isolierglas, insbesondere für Füllungen von Bauöffnungen nach einem der Ansprüche 1 bis 5, **dadurch gekennzeichnet, dass** sie eine elektronische Auswerteeinheit aufweist, die mit dem Temperatursensor (5) und dem Anzeiger (3) verbunden ist.

7. Der Set aus Thermometer und Isolierglas, insbesondere für Füllungen von Bauöffnungen nach Anspruch 6, **dadurch gekennzeichnet, dass** der Temperatursensor (5) sich an der Außenseite des Isolierglases (1) befindet und mit der Auswerteeinheit mit einer flexiblen durch den oder an dem Abstandhalterrahmen (4) hindurchlaufenden oder liegenden Leitung verbunden ist.

8. Der Set aus Thermometer und Isolierglas, insbesondere für Füllungen von Bauöffnungen nach Anspruch 6, **dadurch gekennzeichnet, dass** der Temperatursensor (5) mit der Auswerteeinheit drahtlos vorteilhaft mittels der NFC Plattform oder RFID oder ZigBee verbunden ist.

9. Der Set aus Thermometer und Isolierglas, insbesondere für Füllungen von Bauöffnungen nach beliebigem Anspruch 6 bis 8, **dadurch gekennzeichnet, dass** sie einen im Abstandhalterrahmen (4) vorteilhaft besonders auf seiner Außenseite platzierten Akkumulator (6) besitzt.

10. Der Set aus Thermometer und Isolierglas, insbesondere für Füllungen von Bauöffnungen nach beliebigem Anspruch 1 bis 9, **dadurch gekennzeichnet, dass** sie ein drahtloses Kommunikationsmodul zur Verbindung mit dem Kommunikationsmittel des Benutzers vorteilhaft auf der WiFi und/oder Bluetooth Plattform besitzt.

11. Der Set aus Thermometer und Isolierglas, insbesondere für Füllungen von Bauöffnungen nach beliebigem Anspruch 1 bis 10, **dadurch gekennzeichnet, dass** sie eine Photozelle (7) besitzt.

12. Der Set aus Thermometer und Isolierglas, insbesondere für Füllungen von Bauöffnungen nach beliebigem Anspruch 1 bis 11, **dadurch gekennzeichnet, dass der** Anzeiger (3) ein LCD-Display, vorteilhaft ein durchsichtiges LCD-Display enthält.

13. Der Set aus Thermometer und Isolierglas, insbesondere für Füllungen von Bauöffnungen nach beliebigem Anspruch 1 bis 12, **dadurch gekennzeichnet, dass** sie eine Auswerteeinheit fürs Messen vom atmosphärischen Druck und/oder der Luftfeuchtigkeit und/oder für die Wettervoraussage beinhaltet.

14. Der Set aus Thermometer und Isolierglas, insbesondere für Füllungen von Bauöffnungen nach beliebigem Anspruch 1 bis 13, **dadurch gekennzeichnet, dass** sie eine Auswerteeinheit für die Auswertung der Wärmeverluste des Isolierglases (1) umfasst.

15. Der Set aus Thermometer und Isolierglas, insbesondere für Füllungen von Bauöffnungen nach beliebigem Anspruch 1 bis 14, **dadurch gekennzeichnet, dass** sie eine Anzeige für die Anwesenheit und/oder den Anteil des Isoliergases innen im Isolierglas (1) und/oder einen Drucksensor und/oder einen Bewegungsmelder im Interieur oder Exterieur und/oder Sonnenstrahlungsintensitäts-sensor und/oder für die Steuerung der Beleuchtung innen im Isolierglas (1) oder die Steuerung vom Verdunkeln wenigstens einer Glasscheibe (2) enthält.

## Revendications

1. Un ensemble d'un thermomètre et d'un vitrage isolant, notamment conçu pour les garnitures d'ouvertures de construction, dans lequel le vitrage comporte un capteur de température (5) et un indicateur (3) de la température mesurée et le vitrage isolant (1) comprend au moins deux panneaux vitrés (2), l'indicateur (3) étant adapté pour adhérer au panneau vitré (2), **caractérisé en ce que**
l'indicateur (3) est positionné dans l'espace fermé entre les deux panneaux vitrés (2) du vitrage isolant (1).

2. Un ensemble d'un thermomètre et d'un vitrage isolant, notamment conçu pour les garnitures d'ouvertures de construction selon la revendication 1, **caractérisé en ce que** l'espace entre les deux panneaux vitrés (2) avec l'indicateur (3) est rempli d'un gaz isolant, de préférence d'un gaz inerte.

3. Un ensemble d'un thermomètre et d'un vitrage isolant, notamment conçu pour les garnitures d'ouvertures de construction selon la revendication 1 ou 2, **caractérisé en ce que** les panneaux vitrés (2) forment un double vitrage isolant ou un triple vitrage isolant.

4. Un ensemble d'un thermomètre et d'un vitrage isolant, notamment conçu pour les garnitures d'ouvertures de construction selon l'une quelconque des revendications 1 à 3, **caractérisé en ce que** l'indicateur (3) est fixé à un cadre d'espacement (4) qui relie les panneaux vitrés (2) sur la circonférence.

5. Un ensemble d'un thermomètre et d'un vitrage isolant, notamment conçu pour les garnitures d'ouvertures de construction selon la revendication 4, **caractérisé en ce que** le panneau vitré (2) est équipé d'une ouverture reliant l'extérieur au capteur (5) de température, de préférence au capteur (5) de température positionné dans cette ouverture, le voisinage de cette ouverture étant rendu étanche au moyen d'un mastic.

6. Un ensemble d'un thermomètre et d'un vitrage isolant, notamment conçu pour les garnitures d'ouvertures de construction selon l'une quelconque des revendications 1 à 5, **caractérisé en ce qu'**il comporte une unité d'évaluation électronique couplée au capteur (5) de température et à l'indicateur (3).

7. Un ensemble d'un thermomètre et d'un vitrage isolant, notamment conçu pour les garnitures d'ouvertures de construction selon la revendication 6, **caractérisé en ce que** le capteur (5) de température est positionné sur le côté extérieur du vitrage isolant (1) et relié à l'unité d'évaluation au moyen d'une liaison souple qui traverse le cadre d'écartement (4) ou passe à côte de ce cadre d'espacement (4).

8. Un ensemble d'un thermomètre et d'un vitrage isolant, notamment conçu pour les garnitures d'ouvertures de construction selon la revendication 6, **caractérisé en ce que** le capteur (5) de température est relié à l'unité d'évaluation sans fil, de préférence par le moyen d'une plateforme NFC ou RFID ou ZigBee.

9. Un ensemble d'un thermomètre et d'un vitrage isolant, notamment conçu pour les garnitures d'ouvertures de construction selon l'une quelconque des revendications 6 à 8, **caractérisé en ce qu'**il est équipé d'une batterie (6), cette batterie (6) étant de préférence disposée dans le cadre d'espacement (4), en particulier de préférence de sa face extérieure.

10. Un ensemble d'un thermomètre et d'un vitrage isolant, notamment conçu pour les garnitures d'ouvertures de construction selon l'une quelconque des revendications 1 à 9, **caractérisé en ce qu'**il comprend un module de communication sans fil pour assurer la connexion avec le moyen de communication de l'utilisateur, de préférence sur la plate-forme WiFi et/ou Bluetooth.

11. Un ensemble d'un thermomètre et d'un vitrage isolant, notamment conçu pour les garnitures d'ouvertures de construction selon l'une quelconque des revendications 1 à 10, **caractérisé en ce qu'**il comporte une cellule photo-voltaïque (7).

12. Un ensemble d'un thermomètre et d'un vitrage isolant, notamment conçu pour les garnitures d'ouvertures de construction selon l'une quelconque des revendications 1 à 11, **caractérisé en ce que** l'indicateur (3) comprend un écran avec affichage à cristaux liquides (LCD), de préférence un écran LCD transparent.

13. Un ensemble d'un thermomètre et d'un vitrage isolant, notamment conçu pour les garnitures d'ouvertures de construction selon l'une quelconque des revendications 1 à 12, **caractérisé en ce qu** 'il comprend une unité d'évaluation pour mesurer la pression atmosphérique et/ou l'humidité d'air et/ou pour les prévisions météorologiques.

14. Un ensemble d'un thermomètre et d'un vitrage isolant, notamment conçu pour les garnitures d'ouvertures de construction selon l'une quelconque des revendications 1 à 13, **caractérisé en ce qu** 'il comprend une unité d'évaluation pour évaluer les pertes de chaleur du panneau vitré (1).

15. Un ensemble d'un thermomètre et d'un vitrage isolant, notamment conçu pour les garnitures d'ouvertures de construction selon l'une quelconque des revendications 1 14, **caractérisé en ce qu** 'il comprend un indicateur de la présence et/ou la proportion du gaz isolant à l'intérieur du vitrage isolant (1) et/ou un capteur de pression et/ou un capteur d'humidité et/ou un capteur de mouvement à l'intérieur ou à l'extérieur, et/ou un capteur d'intensité du rayonnement solaire, et/ou une commande de lumière à l'intérieur du vitrage isolant (1) et/ou une commande obscurcissant d'au moins un panneau vitré (2).
